# DEMANDE DE BREVET EUROPEEN

(11) **EP 1 630 194 A1**
(43) Date de publication de la demande: **01.03.2006**
(21) Numéro de dépôt: 05300697.9
(22) Date de dépôt: 25.08.2005
(51) Int. Cl.: C08K 3/32, C08L 95/00

(54) **Procédé pour l'obtention d'un enrobé bitumineux résistant à l'ornièrage et procédé d'obtention du liant bitumineux de base**

(30) Priorité: 26.08.2004 FR 0451911
(71) Demandeur: COLAS S.A., 92653 Boulogne-Billancourt Cédex (FR)
(72) Inventeur: Deneuvillers, Christine, 92290, Chatenay Malabry (FR)
(74) Mandataire: Catherine, Alain

(57) **Abrégé**

L'invention concerne un procédé de fabrication d'un liant bitumineux pour la réalisation de couches et/ou de revêtements de construction et/ou de génie civil comprenant les étapes suivantes :
a) ajouter à un bitume ou mélange de bitumes, à une température de 150 à 220°C, de préférence de 160 à 200°C, d'un agent de traitement choisi parmi les composés de formule Hₙ₊₂PₙO₃ₙ₊₁ avec n supérieur à 1, l'anhydride phosphorique (P₂O₅), et les mélanges de ceux-ci,
b) faire réagir sous agitation, à une température de 150 à 220°C, de préférence de 160 à 200°C l'agent de traitement et le bitume ou mélange de bitumes, et
c) récupérer le liant bitumineux.

## Description

La présente invention se rapporte à un procédé de fabrication de liant bitumineux pour la réalisation de couches et/ou revêtements de construction routière et/ou de génie civil.

Plus particulièrement, la présente invention se rapporte à un enrobé bitumineux comprenant un liant bitumineux selon le procédé de fabrication mentionné précédemment.

Le bitume de distillation directe est le principal liant hydrocarboné utilisé en construction routière pour ses propriétés viscoélastiques et thermoélastiques.

Le chauffage de celui-ci permet de rendre ces liants maniables, et leur refroidissement une fois mis en place leur confèrent leurs propriétés d'usage.

En effet, les bitumes de distillation directe des classes inférieures ou égales à 35/50 possèdent de bonnes propriétés aux températures élevées de service, résistent bien au fluage et confèrent aux matériaux qu'ils composent une très bonne résistance sous trafics lents et canalisés.

De plus, leur susceptibilité thermique leurs permettent de s'auto-réparer de la plupart des fissures apparaissant du fait des contraintes thermiques, et de celles du trafic.

Toutefois, cette susceptibilité thermique des bitumes peut s'avérer pénalisante rendant leur emploi à l'état pur limité dans des conditions climatiques sévères.

Ainsi, leurs propriétés à froid se trouvent réduites : Ils deviennent cassants aux basses températures de service.

L'utilisation de bitumes plus mous confère aux enrobés qu'ils composent de bonnes propriétés à froid, mais ces matériaux se déforment irréversiblement à des températures plus élevées, en particulier sous trafics lents et canalisés.

Pour remédier à ces inconvénients et mettre en oeuvre des enrobés qui résistent bien dans des conditions climatiques variables, plusieurs solutions existent qui font appel à l'utilisation d'un squelette minéral basé sur des matériaux lui conférant une résistance à la déformation sous contrainte externe, et des bitumes durs ou modifiés par des élastomères.

Cependant, l'utilisation de bitumes durs présente l'inconvénient de risques de fissuration à basse température de service, et les bitumes modifiés sont coûteux. De plus, cette modification par des élastomères n'est pas compatible avec toutes les classes de bitume.

Une alternative serait l'emploi de bitumes obtenus par soufflage ayant un fort indice de pénétrabilité. Toutefois ceux-ci nécessitent un investissement industriel lourd, en particulier une unité de fabrication spécialisée, des manipulations à très forte température, ainsi que l'emploi d'oxygène et de catalyseurs métalliques.

La présente invention a donc pour but un procédé de fabrication d'un liant bitumineux peu susceptible aux variations de température, et présentant en particulier de bonnes propriétés à froid.

Elle a également pour but un procédé de fabrication simple d'un liant bitumineux, et pouvant être mis en oeuvre dans des usines de fabrication classiques, ne nécéssitant pas d'unités de fabrication spécialisées, ni de catalyseurs spéciaux, ni encore d'autres constituants dangereux.

L'invention a notamment pour objectif un procédé de fabrication d'un liant bitumineux ayant un coût de fabrication viable.

La demanderesse a trouvé de façon surprenante qu'il était possible de remédier aux inconvénients de l'art antérieur et de remplir les objectifs mentionnés précédemment en faisant réagir un agent de traitement avec un bitume dans les conditions décrites ci-après.

Ainsi, selon l'invention le procédé de fabrication d'un liant bitumineux pour la réalisation de couches et/ou de revêtements de construction et/ou de génie civil comprend les étapes suivantes :
a) l'ajout à un bitume ou mélange de bitumes, à une température de 150 à 220°C, de préférence de 160 à 200°C, d'un agent de traitement choisi parmi les composés de formule Hₙ₊₂PₙO₃ₙ₊₁ avec n supérieur à 1, l'anhydride phosphorique (P₂O₅), et les mélanges de ceux-ci,
b) la réaction sous agitation, à une température de 150 à 220°C, de préférence de 160 à 200°C de l'agent de traitement avec le bitume ou mélange de bitumes, puis
c) la récupération du liant bitumineux.

Au sens de la présente invention, on entend par bitume un mélange de matières hydrocarbonées naturelles issues de la fraction lourde obtenue lors de la distillation du pétrole, ou provenant de gisements naturels se présentant sous forme solide ou liquide, de densité comprise entre 0,8 et 1,2.

L'agent de traitement selon le procédé objet de l'invention a de préférence une concentration calculée en H₃PO₄ de 20 à 105%, de préférence de 70 à 95%.

On entend par agent de traitement des agents chimiques dont la fonction est de modifier chimiquement le(s) bitume(s).

Selon l'invention, la quantité d'agent de traitement ajoutée pour 100 parties en poids de bitume ou mélange de bitumes est de 0,5 à 5 parties en poids, de préférence 1 à 3 parties en poids.

Préférentiellement, l'agent de traitement utilisé pour l'invention est un acide orthopolyphosphorique ou un mélange d'acides orthopolyphosphoriques.

Selon un mode de réalisation préférentiel du procédé objet de l'invention, l'étape de réaction, sous agitation du mélange obtenu à partir de l'ajout d'agent de traitement au bitume ou mélange de bitumes, a une durée de 1 à 3 heures, typiquement de l'ordre de 2 heures.

Contrairement au procédé de fabrication de bitume par soufflage, il n'est pas nécessaire, dans le procédé selon l'invention, d'ajouter de l'oxygène au mélange de bitume et d'agent de traitement.

Par ailleurs, les températures de réaction sont plus basses.

Les liants bitumineux obtenus par le procédé objet de l'invention sont non seulement moins susceptibles à la température, mais ils présentent également un comportement au vieillissement très correct, les tests de laboratoire montrant que leurs propriétés sont maintenues dans le temps.

La présente invention a également pour objet un liant bitumineux susceptible d'être obtenu par le procédé tel que décrit précédemment.

Elle a encore pour objet un enrobé bitumineux comprenant des granulats et un liant bitumineux obtenu selon le procédé tel que décrit ci-dessus.

La granulométrie des granulats est choisie dans la gamme 0/Dₘₐₓ, Dₘₐₓ étant le diamètre maximal des granulats tel que défini selon la norme XP P 18-540 « Granulats-Définitions, conformités, spécifications » de octobre 1997, et allant de 0 à 25 mm.

Avantageusement, les enrobés bitumineux selon l'invention comprennent des granulats de classe granulométrique déterminée selon la norme NF XP P 18-540 0/4, 4/6, 6/10 et 10/14, ou des combinaisons de ces classes de granulats.

En général, les enrobés selon l'invention comprennent en pourcentage du poids par rapport au poids total d'enrobé de 20 à 25% de granulats de classe 10/14, de 15 à 20% de granulats de classe 6/10, de 10 à 15% de granulats de classe 4/6, de 40 à 45% de granulats de classe 0/4, étant donné que le total de granulats est égal à 100%.

L'enrobé selon l'invention comprend généralement des fines, de préférence des fines calcaires.

Les fines selon l'invention sont des charges minérales ou siliceuses sous forme de grains passant à travers un tamis à mailles carrées de 0,063 mm de côté.

Avantageusement, les enrobés selon l'invention comprennent, en pourcentage du poids par rapport au poids total d'enrobé de 0,5 à 5% de fines étant donné que le total de granulats et de fines est égal à 100%.

L'enrobé bitumineux comprend avantageusement 1 à 10 parties, de préférence 3 à 8 parties en poids de liant bitumineux pour 100 parties en poids de granulat et éventuellement de fines

Les enrobés dans lesquels les liants obtenus selon l'invention interviennent présentent un excellent comportement à l'orniérage, se traduisant par le fait que, pour une classe de pénétrabilité équivalente, les liants bitumineux obtenus produisent des enrobés largement plus résistants à l'orniérage que les bitumes classiques issus de distillation directe.

Les liants bitumineux selon l'invention peuvent également être utilisés dans des matériaux appliqués à froid tels que des enrobés à froid ou des enrobés coulés à froid, ou encore sous forme d'émulsion pour la fabrication de tels enrobés à froid ou coulés à froid, et dont l'enrobage des granulats peut s'effectuer sans chauffage et sans séchage des granulats.

Les exemples suivants illustrent la présente invention.

### Procédé de fabrication de liant bitumineux. 1^{er} Exemple

Les classes de bitume mentionnées ont été déterminées selon la norme NF EN 12591 « Bitume et liants bitumineux ― spécification des bitumes » de décembre 1999.

On a fabriqué un bitume de classe 20/30 selon le procédé suivant

On a mélangé 60% de bitume 20/30 avec 40% de bitume 35/50, mélange que l'on a placé à 180°C.

Puis 2,5 ppc d'acide orthopolyphosphorique à une teneur en acide de 84% ont été ajoutés au bitume, à une température de 180°C.

Le mélange a ensuite été soumis à réaction sous agitation lente pendant 2 heures, puis refroidit à température ambiante.

Pour réaliser les mesures des caractéristiques du liant, celui-ci a préalablement été réchauffé de façon à permettre sa manipulation lors des mesures.

Les caractéristiques des bitumes obtenus selon l'invention ont été mesurées selon la norme NF EN 1426 « Bitumes et liants bitumineux ― Détermination de la pénétrabilité à l'aiguille » de décembre 1999 pour la mesure de la pénétrabilité, et NF EN 1427 « Bitumes et liants bitumineux ― Détermination de la température de ramollissement ― Méthode Bille et Anneau » de janvier 2000 pour la mesure de la température de ramollissement, puis comparées avec celles de bitume de distillation directe non traités. Les résultats comparatifs sont relatés dans le tableau ci-dessous :

**Comparaison des caractéristiques de bitume de classe 20/30 :**

| Liant réchauffé | Bitume 20/30 de distillation directe | Bitume classe 20/30 obtenu selon l'invention |
|---|---|---|
| Pénétrabilité (en 1/10mm) NF EN 1426 | 20/30 | 20/30 |
| Temp. ramollissement BA (°C) NF EN 1427 | 55à63 | 66 |
| IP | Négatif | 1,5 |
| Point de Fraass (°C) | -9 | -9 |
| DSR (°C) AASHTO TP5 | 78 | 88 |

| Après vieillissement RFTOT NF 12607-1 : | | |
|---|---|---|
| Pénétrabilité résiduelle NF EN 1426 | 76 | 81 |
| Augmentation Temp. ramollissement BA (°C) NF EN 1427 | 6,2 | 8,6 |
| DSR (°C) AASHTO TP5 | 79 | 89,4 |

| Après vieillissement RFTOT et PAV: | | |
|---|---|---|
| BBR AASTHO TP1 Temp. d'isomodule (°C) Température critique | -13,8 -4,8 | -14,4 -10,7 |
| Classe PG ASSHTO MP1 | 82-10 | 82-16 |

### Procédé de fabrication de liant bitumineux. 2^{ème} Exemple

Un bitume de classe 35/50 a été fabriqué selon les conditions suivantes :
- 100% de bitume de classe 50/70 sont placés à 180°C,
- 3 ppc d'acide orthopolyphosphorique sont ajoutés au bitume de classe 50/70 à une température de 180°C. Le mélange est ensuite soumis à réaction sous agitation lente pendant 2 heures, puis refroidit à la température ambiante.

Pour réaliser les mesures des caractéristiques du liant, celui-ci a préalablement été réchauffé de façon à permettre sa manipulation lors des mesures. Les caractéristiques des bitumes obtenus selon l'invention ont été mesurées selon la norme NF EN 1426 pour la mesure de la pénétrabilité, et NF EN 1427 pour la mesure de la température de ramollissement, puis comparées avec celles de bitumes de distillation directe non traités. Le liant bitumeux selon l'invention présente notamment une pénétrabilité résiduelle à l'aiguille à 25°C, selon la norme NF EN 1426 de décembre 1999, supérieure à 78 et un module de cisaillement mesuré selon la norme AASHTO TP5 supérieur à 85. Les résultats comparatifs sont donnés dans le tableau ci-dessous :

**Comparaison des caractéristiques de bitume de classe 35/50 :**

| Liant réchauffé | Bitume 35/50 de distillation directe | Bitume classe 35/50 obtenu selon l'invention |
|---|---|---|
| Pénétrabilité (en 1/10mm) NF EN 1426 | 35/50 | 35/50 |
| Temp. ramollissement BA (°C) NF EN 1427 | 50-58 | 63 |
| IP | Négatif | 1,3 |
| Point de Fraass (°C) | -12 | -19 |
| DSR (°C) AASHTO TP5 | 74 | 83 |

| Après vieillissement RFTOT NF 12607-1 : | | |
|---|---|---|
| Pénétrabilité résiduelle NF EN 1426 | 62 | 79,5 |
| Augmentation de la Température de ramollissement BA (°C) NF EN 1427 | 6,4 | 9,0 |
| DSR (°C) AASHTO TP5 | 70,2 | 86,4 |

| Après vieillissement RFTOT et PAV: | | |
|---|---|---|
| BBR AASHTO TP1 Temp. d'isomodule (°C) Temp. critique | -13,2 -8,4 | -17,1 -15 |
| Classe PG ASSHTO MP1 | 76-16 | 82-22 |

| | | |
|---|---|---|
| DSR : Rhéomètre à Cisaillement Dynamique, selon la norme AASHTO TP5 | | |
| RFTOT : Rolling Film Thin over Test : Test de vieillissement à haute température selon la norme NF 12607-1 | | |
| PAV : Réacteur Préssurisé de Viellissement, selon la norme AASHTO TP1 | | |
| BBR : Rhéomètre de flexion de Poutre, selon la norme AASHTO TP1 | | |
| AASHTO TP5: Déformation à haute température | | |
| Classe PG ASSHTO MP1 :Class PG selon la norme ASSHTO MP1 | | |
| IP : Indice de pénétrabilité | | |
| Temp. Ramollissement BA (°C) NF EN 1427 : « Détermination de la température de ramollissement - Méthodes Bille et Anneau », selon la norme NF EN 1427 | | |
| N.D : Non Déterminé | | |

### Fabrication d'enrobés bitumineux selon le procédé de l'invention :

Un enrobé bitumineux a été fabriqué selon le mélange suivant :
- 23% de granulats de classe 10/14 fabriqués par la société Magnance®,
- 18,5% de granulats de classe 6/10 ( société Magnance®),
- 14% de granulats de classe 4/6 ( société Magnance®),
- 43% de granulats de classe 0/4 ( société Magnance®),
- 1,5% de fines calcaires,
- 5,7 ppc de liant bitumineux de classe 35/50 obtenu selon le procédé de fabrication de l'invention.

Les caractéristiques des enrobés bitumineux obtenus ont été déterminées selon la norme NF P 98-252 pour la mesure du compactage de l'enrobé, et la norme NF P 98-253-1 pour la mesure de la résistance à l'orniérage, puis comparées avec celles d'enrobés obtenus à partir de bitumes non traités.

Les résultats de ces mesures sont donnés dans le tableau ci-dessous.

**Comparaison des caractéristiques d'enrobés bitumineux :**

| | Bitume 35/50 | Bitume 35/50 obtenu selon l'invention |
|---|---|---|
| PCG NF P 98-252 | | |
| Vides à 10 girations | N.D | 15,2 |
| Vides à 80 girations | N.D | 7,3 |
| Omiérage NF P 98-253-1 | | |
| 10 000 cycles (%) | N.D | 3,5 |
| 30 000 cycles (%) | 7,0 | 4,0 |
| 100 000 cycles (%) | 8,7 | 4,6 |

| | | |
|---|---|---|
| PCG : Presse de compactage à cisaillement giratoire | | |
| N.D : Non Déterminé | | |

## Revendications

1. Procédé de fabrication d'un liant bitumineux pour la réalisation de couches et/ou de revêtements de construction et/ou de génie civil **caractérisé en ce qu'**il comprend les étapes suivantes :
a) l'ajout à un bitume ou mélange de bitumes, à une température de 150 à 220°C, de préférence de 160 à 200°C, d'un agent de traitement choisi parmi les composés de formule Hₙ₊₂PnO₃ₙ₊₁ avec n supérieur à 1, l'anhydride phosphorique (P₂O₅), et les mélanges de ceux-ci,
b) la réaction sous agitation, à une température de 150 à 220°C, de préférence de 160 à 200°C de l'agent de traitement avec le bitume ou mélange de bitumes, puis
c) la récupération du liant bitumineux.

2. Procédé selon la revendication 1 **caractérisé en ce que** l'agent de traitement a une concentration calculée en H₃PO₄ de 20 à 105%, de préférence de 70 à 95%.

3. Procédé selon la revendication 1 ou 2 **caractérisé en ce que** la quantité d'agent de traitement ajoutée pour 100 parties en poids de bitume ou mélange de bitumes est de 0,5 à 5 parties en poids.

4. Procédé selon l'une quelconque des revendications précédentes **caractérisé en ce que** l'étape de réaction après agitation a une durée de 1 à 3 heures, de préférence 2 heures.

5. Procédé selon l'une quelconque des revendications précédentes **caractérisé en ce que** l'agent de traitement est un acide orthopolyphosphorique ou un mélange d'acides orthopolyphosphoriques.

6. Liant bitumineux **caractérisé en ce qu'**il est susceptible d'être obtenu par le procédé selon l'une quelconque des revendications 1 à 5.

7. Liant bitumineux selon la revendication 6 **caractérisé en ce que** sa pénétrabilité résiduelle à l'aiguille à 25°C, selon la norme NF EN 1426 de décembre 1999, est supérieure à 78.

8. Liant bitumineux selon l'une quelconque des revendications 6 ou 7 **caractérisé en ce qu'**il possède un module de cisaillement mesurée selon la norme AASHTO TP5 supérieure à 85.

9. Enrobé bitumineux comprenant des granulats et un liant bitumineux selon l'une quelconque des revendications 6 à 8.

10. Enrobé bitumineux selon la revendication 9 **caractérisé en ce qu'**il comprend, en pourcentage du poids par rapport au poids total d'enrobé, de 20 à 25% de granulats de classe 10/14, de 15 à 20% de granulats de classe 6/10, de 10 à 15% de granulats de classe 4/6, de 40 à 45% de granulats de classe 0/4, étant donné que le total de granulats est égal à 100%.

11. Enrobé bitumineux selon la revendication 9 **caractérisé en ce qu'**il comprend des fines, de préférence des fines calcaires pouvant passer au travers d'un tamis à mailles carrées de 0,063 mm de côté.

12. Enrobé bitumineux selon la revendication 10 **caractérisé en ce qu'**il comprend, en poids par rapport au poids total d'enrobé, de 0,5 à 5% de fines, étant donné que le poids total de granulats et de fines est égal à 100%.

13. Enrobé bitumineux selon l'une quelconque des revendications 9 à 11 **caractérisé en ce qu'**il comprend 1 à 10 parties, de préférence 3 à 8 parties en poids de liant bitumineux pour 100 parties en poids de granulat et de fines.

14. Liant bitumineux selon l'une quelconque des revendications 6 à 8 **caractérisé en ce qu'**il est utilisé dans des matériaux appliqués à froid tels que des enrobés à froid ou des enrobés coulés à froid.
